# EUROPEAN PATENT SPECIFICATION

(11) **EP 2 223 438 B1**
(45) Date of publication and mention of the grant of the patent: **19.11.2014**
(21) Application number: 07847358.4
(22) Date of filing: 26.11.2007
(51) Int. Cl.: H04B 7/005

(54) **OUTER LOOP POWER CONTROL FOR E-DCH**
SENDELEISTUNGSREGELUNG IN DER AUSSENSCHLEIFE FÜR E-DCH
COMMANDE DE PUISSANCE DE BOUCLE EXTERNE POUR E-DCH

(43) Date of publication of application: 01.09.2010
(73) Proprietor: Telefonaktiebolaget LM Ericsson (publ), 164 83 Stockholm (SE)
(72) Inventor: ANDERSSON, Andreas, S-438 35 Landvetter (SE)
(74) Representative: Vejgaard, Christian
(86) International application number: PCT/EP2007/062830
(87) International publication number: WO 2009/068078

(56) References cited:
- EP-A- 1 089 456
- WO-A-2005/006605
- US-A1- 2004 095 918
- US-A1- 2006 174 179
- YIPING WANG ET AL: "Power control methods for dedicated control channels during discontinuous transmission in IS-2000 systems" PERSONAL, INDOOR AND MOBILE RADIO COMMUNICATIONS, 2000. PIMRC 2000. TH E 11TH IEEE INTERNATIONAL SYMPOSIUM ON SEPT. 18-21, 2000, PISCATAWAY, NJ, USA,IEEE, vol. 1, 18 September 2000 (2000-09-18), pages 271-275, XP010520645 ISBN: 978-0-7803-6463-9

## Description

### TECHNICAL FIELD

The present invention relates to a method and a telecommunication system for power control, and a base station in the system enabling said method.

### BACKGROUND

There is an increasing need of delivering wireless technology with broadband capacity for cellular networks. A good broadband system must fulfil certain criteria, such as high data rate and capacity, low cost per bit, good Quality of Service and greater coverage. High Speed Packet Access (HSPA) is an example of a network access technology that enables this.

HSPA is a collection of protocols which improves the performance of existing Universal Mobile Telecommunication Systems (UMTS), which is a third generation (3G) cell phone technology. UMTS uses Wideband Code Division Multiple Access (WCDMA) as air interface for the radio-based communication between user equipment (UE), in form of a mobile terminal, and the base station (BS). The air interface in the Open Systems Interconnection (OSI) model comprises layers 1 and 2 of the mobile communications system, establishing a point-to-point link between the UE and a radio access node (RAN).

HSPA is an integral part of WCDMA. Wide-area mobile coverage can be provided with HSPA. It does not need any additional spectrum or carriers. Currently, WCDMA can provide simultaneous voice and data services to users on the same carrier. This also applies to HSPA which means that spectrum can be used efficiently. Simulations show that in a moderately loaded system, HSPA can largely reduce the time it takes to download and to upload large files. The primary benefits of HSPA are improved end-user experience. In practice, this means shorter UL and DL times as a result of higher bit-rates and reduced latency compared to earlier releases of WCDMA. HSPA also benefits operators by reducing the production cost per bit. More users can be served with higher bit-rates at lower production costs.

HSPA is the set of technologies defining the migration path of WCDMA operators worldwide. The two existing features, High Speed Downlink Packet Access (HSDPA) and High Speed Uplink Packet Access (HSUPA), in the HSPA family provides the increased performance by using improved modulation schemes and by refining the protocols by which handsets and base stations communicate. These improvements lead to the better utilization of the existing radio bandwidth provided by UMTS.

High Speed Downlink Packet Access (HSDPA) is the first feature within HSPA. It is part of the WCDMA Third Generation Partnership Project (3GPP) Release 5 specification. HSDPA provides a new downlink transport channel that enhances support for high-performance packet data applications. It represents the first step in the evolution of WCDMA performance. HSDPA can deliver an up to 35 fold increase in downlink data rates of standard WCDMA networks, enabling users to access the Internet on mobile phones and laptops, at speeds previously associated with fixed line DSL.

HSDPA is based on shared channel transmission, which means that some channel codes and the transmission power in a cell are seen as a common resource that is dynamically shared between users in the time and code domains for a more efficient use of available codes and power resources in WCDMA. The radio channel conditions experienced by different downlink communication links vary significantly, both in time and between different positions in the cell. To compensate for rapidly varying radio conditions in the downlink, HSDPA relies on bit-rate adjustment. That is, while keeping transmission power constant, it adjusts (by lowering) the data rate by adjusting the modulation.

Along with the HS-DSCH (High Speed Downlink Shared Channel) physical channel on which payload data is sent, three new physical channels are also introduced: HS-SCCH, HS-DPCCH and HS-PDSCH. The High Speed-Shared Control Channel (HS-SCCH) informs the user that data will be sent on the HS-DSCH 2 slots ahead. The Uplink High Speed-Dedicated Physical Control Channel (HS-DPCCH) carries acknowledgment information and current channel quality indicator (CQI) of the user. This value is then used by the base station to calculate how much data to send to the user devices on the next transmission. The High Speed-Physical Downlink Shared Channel (HS-PDSCH) is the channel mapped to the above HS-DSCH transport channel that carries actual user data.

High Speed Uplink Packet Access (HSUPA) is the second feature within HSPA. It is part of the WCDMA Third Generation Partnership Project (3GPP) Release 6 specification. HSUPA provides a new uplink (UL) transport channel called Enhanced Dedicated Channel (E-DCH). HSUPA dramatically increases the uplink data traffic rate. This technology is likely to significantly increase the amount of data uploaded over mobile networks, especially user-generated content. Although a lot of it is downlink oriented, there are still quite a number of applications that will benefit from an improved uplink. These include the sending of large e-mail attachments, pictures, video clips, blogs etc. HSUPA is also known as Enhanced UL. In contrast to HSDPA, the new uplink channel that is introduced for Enhanced Uplink is not shared between users, but is dedicated to a single user.

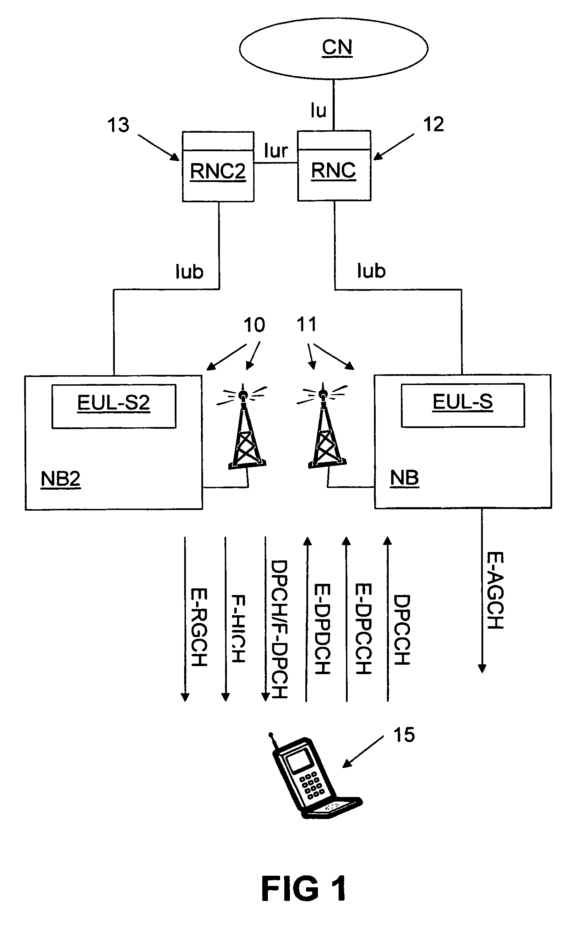

Figure 1 shows a HSUPA network overview. A user terminal 15 communicates with the core network CN via at least one base station 11. The system further comprises a second base station 10 with a corresponding system. A first radio network controller RNC 12 establishes an E-DCH which enables uplink data traffic from the user terminal to the base station. The E-DCH carries data for at least one radio network bearer. The term "lu" in figure 1 represents the interface between RNC and core network. The term "lub" represents the interface between RNC and the radio bases station (RBS).

Several new physical channels are added to provide and support high-speed data transmission for the E-DCH. As shown in figure 1, two new code-multiplexed uplink channels are added:
- E-DCH Dedicated Physical Data Channel (E-DPDCH)
- E-DCH Dedicated Control Channel (E-DPCCH)

E-DPDCH carries the payload data, and the E-DPCCH carries the control information associated to the E-DPDCH. E-DPDCH is used to carry the E-DCH transport channel. There may be zero, one or several E-DPDCH on each radio link wherein there is at most one E-DPCCH on each radio link. E-DPDCH and E-DPCCH are always transmitted simultaneously. E-DPCCH shall not be transmitted in a slot unless E-DPDCH is also transmitted in the same slot.

Similarly, three new channels, see fig. 1, are added to the downlink for control purposes:
- E-DCH Hybrid Automatic Repeat Request (HARQ) Indicator Channel (E-HICH) carrying the uplink E-DCH hybrid Acknowledgement (ACK) and Negative ACK (NACK) indicator.
- E-DCH Absolute Channel (E-AGCH) carrying absolute grants, which means that it provides an absolute limitation of the maximum amount of uplink resources the UE may use.
- E-DCH Relative Grant Channel (E-RGCH) carrying the uplink E-DCH relative grants, which means that it controls the resource limitations by increasing or decreasing the limitations with respect to the current serving grant.

E-AGCH is only transmitted from the serving cell. E-RGCH and E-HICH are transmitted from radio links that are part of the serving radio link set and from non-serving radio links.

As shown in figure 1 the same E-DCH can be provided both through the first RNC 12 for the serving cell and through a second RNC (RNC2) 13 for the non-serving cell. The second RNC 13 serves a separate base station 10 with a Node B NB2 and an enhanced UL scheduler (EUL-S2). Except for E-AGCH (which can only be transmitted through the serving cell) all the physical channels can be transmitted through either of the cells. As an alternative one RNC can serve both a serving cell and a non-serving cell. The term "lur" in figure 1 represents the interface between the first RNC 12 and the second RNC 13. Only one RNC will communicate with the core network (e.g. the first RNC). The first RNC is in control of the connection and handles things like soft handover.

Note that HSUPA channels are added on top of uplink / downlink dedicated channels. Each UE 15 therefore additionally carries an uplink and downlink dedicated physical channel (DPCH), see fig. 1. In the downlink, a fractional dedicated channel (F-DPCH) can be used alternatively. The F-DPCH carries control information and is a special case of downlink Dedicated Physical Control Channel (DPCCH). UL might only contain the DPCCH as in fig 1. It could also contain a Dedicated Physical Data Channel (DPDCH). The F-DPCH has been introduced in 3GPP release 6 in order to optimize the downlink codes usage.

Soft handover refers to the feature used in WCDMA standards, such as HSUPA technology. In soft handover the user terminal 15 is simultaneously connected to two or more cells, such as the cells served by the base stations 10 and 11. It is a form of mobile-assisted handover in which the user terminal measures the power from different cells and requests a handover if needed. It is with WCDMA possible to simultaneously receive signals from both base station 10 and base station 11. The user terminal can combine the signals from both stations and/or select the signals with the highest quality.

In HSUPA, the Node B NB/NB2 in the base stations 10, 11 send the bit stream from the mobile terminal to the RNC 12 together with information about the quality of the received bits. The RNC examines the quality of the bit streams and selects the stream with the highest quality. From now on the term "base station" will be used, even though the Node Bs NB/NB2 in the base stations 10, 11 that actually performs most of the steps. From now on there will also be reference only to the RNC 12, since the RNC2 13 forwards the information to the RNC 12 and the RNC 12 performs the actual power control

The RNC 12 may also use a power control method to control the transmit power that the user terminal 15 is using when the quality of the received bit stream is too low. There is an inner loop power control method between the base station 10, 11 and the user terminal, which is based on a signal to interference ratio (SIR) target. The base station 10, 11 measures continuously SIR of a physical channel (Dedicated Physical Control Channel - DPCCH) transmitted by the user terminal 15. SIR relates to the fact that a certain DPCCH channel power in needed in relation to the interference so that the system is able to decode a data packet. SIR is the quotient between the average received modulated carrier power and the average received cochannel interference power, e.g. cross-talk from other transmitters than the useful signal.

This real time SIR measured is compared to the SIR target, which is provided by the RNC 12. The base station 10, 11 transmits a power control (TPC) command in a downlink to the user terminal 15 to increase or decrease the transmit channel power level so that the real time SIR measured is controlled towards the SIR target. With this power control, the signals from different user terminals can be received with the required quality at changing conditions.

The inner loop power control is dependent on an outer loop power control (OLPC). The SIR target is set in the OLPC by the RNC 12. The OLPC is a quality control loop in the RNC. It typically operates on information on the number of decoding attempts needed by the user terminal 15 for successful decoding of a transport block (TB). A TB may be a group of bits decoded for the error control or a string of records treated as a unit. A block decoding attempt ends either in a decoding failure (non-successful decoding) or a successful decoding. In soft handover the user terminal 15 will stop transmitting a particular TB as soon as it has been acknowledged (successfully decoded) by any cell involved in the handover.

A hybrid automatic repeat request (HARQ) may be used for controlling the quality of the signalling from the user terminal 15 performed by decoding TBs. In HARQ, when coded TB is received by the base station 10, 11, the station first decodes the TB. If there is a decoding failure (the channel quality is bad and not all transmission errors can be corrected), a retransmission of the particular TB is requested by the station. When HARQ is used, a sequence number Reception Sequence Number (RSN) is reset to zero when new data (a new TB) is transmitted. If the TB cannot be decoded, the RSN is stepped up. It is further stepped up for every failed decoding of the particular TB, to a maximum value of e.g. 3. The HARQ failure indication is described in 3GPP TS 25.427.

In WO 2006/016230 a failure indication method is disclosed. When a maximum number of decoding attempts (repeated) are reached for a particular TB, a failure indication is sent to the RNC 12. The TBs with errors (so called "erasures") received are stored in the meantime and transmitted with the failure indication. The RNC checks the Block Error Rate (BLER) ratio on the TBs forwarded from the station 10, 11 at failure indication and determines the SIR target in the OLPC on the basis of the BLER. In particular, the RNC compares the BLER of the received TB with a target BLER (determined based on the QoS (Quality of Service) for a particular service) and step up the SIR target if the received BLER is higher the target BLER.

The new SIR target is forwarded to the base stations 10, 11 and the user terminal 15. Since a maximum number of decoding attempts are defined, the base station 10, 11 will not notify the RNC about every failure. Thereby, the RNC will not increase the SIR target unnecessarily and consequently waste of channel capacity and transmission power is avoided.

In US 7224993, a power control method is disclosed in which a discontinuous transmission mode (DTX) frame is detected in a channel. DTX is a mode of operation in which the station 10, 11 or the user terminal 15 switches is transmitted on or off automatically (without releasing the channel) when no data is sent to save channel capacity and transmission power and decrease interference. In DTX mode unannounced frames are transmitted with a similar SIR as erasures, and there is a risk that the base station at low signal strength detects the DTX frames as erasures, since they are unannounced.

This eventually leads to an unnecessary repetition of the frame (requested by the base station) and/or an increase of SIR target by the RNC (resulting in an increased transmittal power) when notified (failure indication) by the base station. The problem is solved by separating erasures (TB errors) from DTX frames by looking at a sequence number (RSN) included e.g. in a protocol header for the delivered packet. Information over a radio link protocol (RLP) is evaluated to determine if the frame is correct, is an erasure or a DTX frame.

Sometimes only a small amount of data is sent infrequently and the connection is in soft handover. This is for instance in ping or when some other "keep-alive" signalling is performed. The following scenario may then occur:
If the TB is successfully decoded in one of the cells (non-serving cell), for instance served by the base station 10, and the user terminal 15 receives the acknowledgement it will stop transmitting the particular TB.
The base station 11, serving the other cell (serving cell), will eventually send a HARQ indication (failure indication) to the RNC 12 and indicate that the TB has not been decoded despite the maximum number of decoding attempts (see WO 2006/016230).
This may trigger an increase of the SIR target for no good reason at all, since the TB was actually decoded by the base station 10 of the non-serving cell.

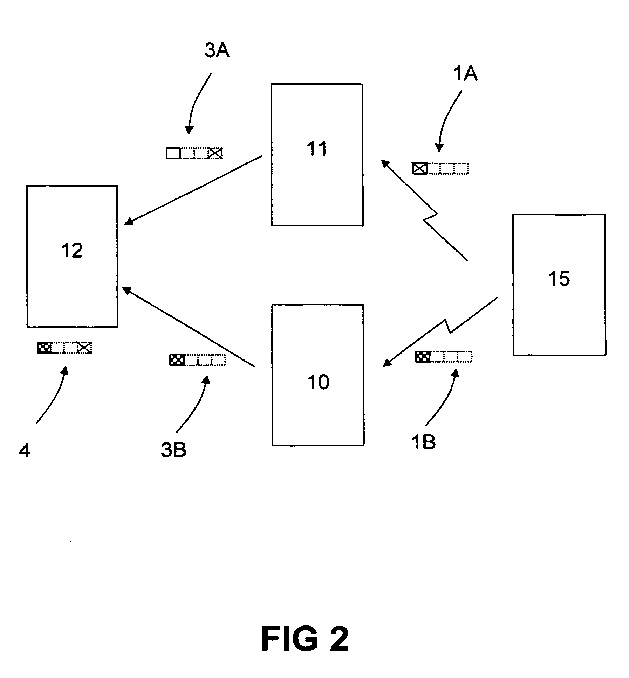

This is illustrated in figure 2 showing an overview of the existing solution for OLPC. First transmission 1A of the TB fails in the serving cell where the serving radio link (RL) is present. The first decoding attempt with non-successful decoding is illustrated by a cross in the first square from the left. This cell is served by the base station 11. The base station then asks the station to repeat the particular TB. However, when no successful decoding takes place within the time of the max number of decoding attempts (in total four in this example, illustrated by four squares), a HARQ Failure indication 3A is sent to the RNC, eventually together with the last TB received (or optionally all TBs stored since the first attempt).

Simultaneously, the user terminal 15 also transmits 1 B the particular TB to the non-serving cell served by the base station 10. The first decoding attempt of the TB is successful (decoded OK) => no more retransmissions from the user terminal. This is illustrated by a pattern (chess pattern) in the first square from the left. The base station 10 then transmits 3B a Cyclic Redundancy Check (CRC) OK confirmation together with the TB to the RNC 12.

The RNC 12 receives both sequences of received TB from the base stations 10, 11 via lub, which are combined to a single sequence 4 with the TB with no error and the error TB. The single sequence for instance represents the TBs received, decoded and sent to the RNC by the base stations.

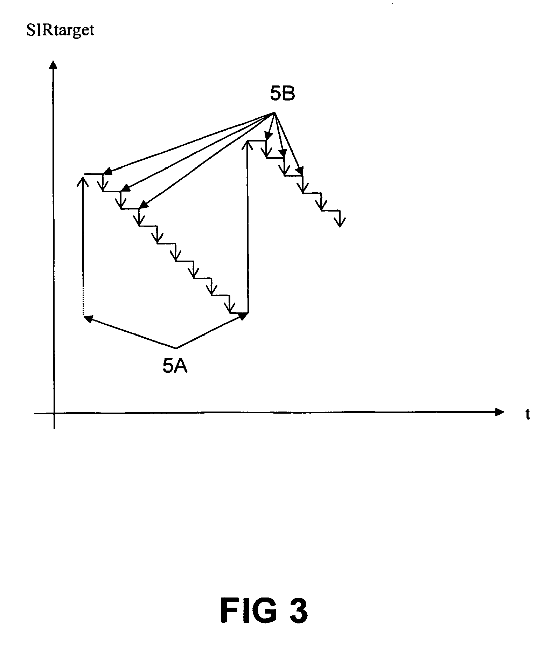

Figure 3 shows an OLPC example. When the base station 11 does not manage to decode the TB and transmits a failure indication (HARQ) to the RNC 12, reference A, SIR target (y-axis) is stepped up 5A (a large step). Every time the RNC receives information (CRC OK confirmation) the SIR target is stepped down 5B a small step.

With the scenario described it is not possible to determine based on the sequence number in upcoming transmissions whether another base station, e.g. base station 10, has managed to decode (successful decoding) the TB. Therefore, the solution described in US 7224993 is not useful.

### SUMMARY

The object of the present invention is to solve the above problem relating to the described scenario, by a method and a telecommunication system for power control, and a base station in the system enabling said method.

The problem is solved by means of a method for power control in an enhanced uplink (UL) telecommunication system. The system comprises at least one first radio network controller (RNC) and at least one first and one second base station enabling wireless communication with at least one first user terminal. The first and the second base stations receive at least a first transport block (TB), the first TB being transmitted by the user terminal over an established communication channel. The first and the second base station then controls whether the received first TB includes at least one error. If at least one error in the first TB is found by the first and/or the second base station, the base station/-s that found the error further controls the number of decoding attempts for the first TB, the number of decoding attempts being stored in a decoding attempt counter.

What particularly characterizes the method according to the present invention is that if the number of decoding attempts for the first TB is equal to a decoding attempt threshold, the base station/-s that found the error further determines if the first TB is a discontinuous transmission frame (DTX) or a TB including errors. If the base station/-s determines that the first TB is a DTX, the base station/-s that found the error further resets the decoding attempt counter and prepares the station/-s for a new, second TB.

The problem is also solved by means of a base station adapted for power control in an enhanced uplink (UL) telecommunication system. The system further comprises at least one first radio network controller (RNC), at least one first and one second base station in the system enables wireless communication with at least one first user terminal. The first and the second base stations are adapted to receive at least a first transport block (TB), the first TB being transmitted by the user terminal over an established communication channel. The first and the second base station are further adapted to control whether the received first TB includes at least one error. If at least one error in the first TB is found by the first and/or the second base station, the base station/-s that found the error are further adapted to control the number of decoding attempts for the first TB, the number of decoding attempts being stored in a decoding attempt counter.

What particularly characterizes the base station according to the present invention is that if the number of decoding attempts for the first TB is equal to a decoding attempt threshold, the base station/-s that found the error is further adapted to determine if the first TB is a discontinuous transmission frame (DTX) or a TB including errors. If the first TB is a DTX, the base station/-s that found the error is further adapted to reset the decoding attempt counter and prepares the station/-s for a new, second TB.

The problem is finally solved by means of an enhanced uplink (UL) telecommunication system adapted for power control. The system comprises at least one first radio network controller (RNC) and at least one first and one second base station enabling wireless communication with at least one first user terminal. The first and the second base stations are adapted to receive at least a first transport block (TB), the first TB being transmitted by the user terminal over an established communication channel. The first and the second base station are further adapted to control whether the received first TB includes at least one error. If at least one error in the first TB is found by the first and/or the second base station, the base station/-s that found the error are further adapted to control the number of decoding attempts for the first TB, the number of decoding attempts being stored in a decoding attempt counter.

What particularly characterizes the system according to the present invention is that if the number of decoding attempts for the first TB is equal to a decoding attempt threshold, the base station/-s that found the error is further adapted to determine if the first TB is a discontinuous transmission frame (DTX) or a TB including errors. If the first TB is a DTX, the base station/-s that found the error is further adapted to reset the decoding attempt counter and prepares the station/-s for a new, second TB.

Since DTX is determined by the base station and the counter is reset if DTX is determined an unnecessary increase of the SIR target for E-DCH by the OLPC in the RNC is avoided. Thereby excessive transmit power from the user terminal is avoided.

### BRIEF DESCRIPTION OF DRAWINGS

In the following text the invention will be described in detail with reference to the attached drawings. These drawings are used for illustration only and do not in any way limit the scope of the invention:
Figure 1 shows a HSUPA network overview.
Figure 2 shows the receiving, decoding and sending of TBs in a HSUPA network.
Figure 3 shows the OLPC in dependency on the received, decoded and sent TBs.
Figure 4 shows the main code for OLPC according to the present invention.
Figure 5 shows the DTX detection code according to the present invention.
Figure 6 shows the receiving, decoding and sending of TBs in a HSUPA network with the proposed improvement according to figure 4 - 5.

### DETAILED DESCRIPTION

The invention will now be described in detail with reference to embodiments described in the detailed description and shown in the drawings.

The embodiments refer to a method and a telecommunication system for power control, and a base station in the system enabling said method. The system and the base station in the system are adapted to perform the method steps as described in the method. It should be understood by a person skilled in the art that the fact the system and in particular the system parts perform a method step means that it is adapted to perform said step. This is enabled by introducing a new mechanism into the system parts, the new mechanism performing the method steps described herein.

Figure 1, 2 and 6 shows a HSUPA network overview. A user terminal 15 communicates with the core network CN via a first base station 11 and a second base station 10. Figure 1 and 2 has also been described in the background part. A radio network controller RNC 12 establishes an Enhanced Dedicated Channel (E-DCH) which enables uplink data traffic from the user terminal 15 to the base station, the E-DCH carrying data for at least one radio access bearer (RAB).

The system comprises at least one first radio network controller RNC 12 which manages and controls at least one first 11 and one second 10 base stations. It is also the link between the bases stations and the Core Network CN. The base stations comprises a Node B NB/NB2 and (since it is a HSUPA system) an Enhanced UL Scheduler EUL-S. The base stations further comprises antennas enabling wireless communication with at least one first user terminal (15). The system is shown in figure 1, 2, 6 and described in the background part.

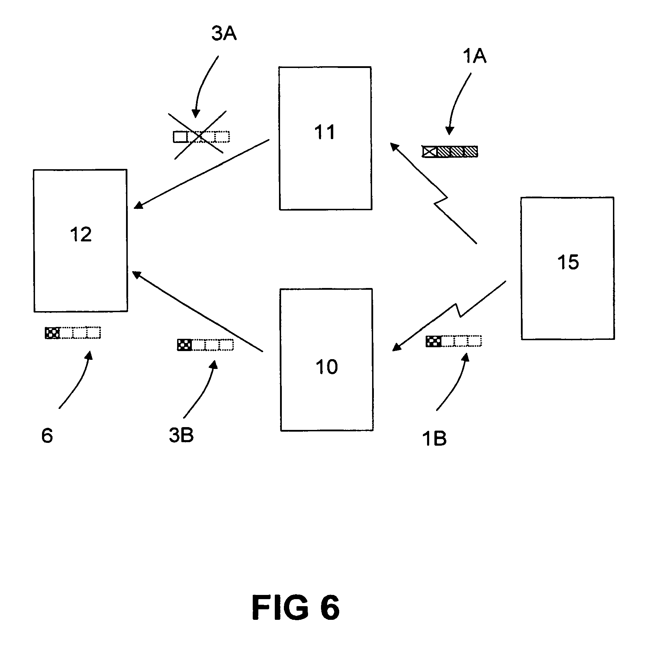

The first 11 and the second 10 base stations receive 1 A, 1 B, see figure 2 and 6, at least a first transport block (TB). The first TB is transmitted by the user terminal 15 over an established communication channel (E-DCH). A TB may be a group of bits decoded for the error control or a string of records treated as a unit. A TB is the smallest data packet (for a certain configuration) which can be sent in a Transmission Time Interval - TTI. In E-DCH there is only one TB in each TTI, while in other types of transport channels a TTI can contain more than one TB (for example four TB of 336 bits each over a TTI of 20 ms results in a bit rate of 64 kbps).

The first and the second base stations 10, 11 controls whether the received first TB includes at least one error. Hybrid Automatic Repeat Request-HARQ is preferably used for controlling the quality of the signalling from the user terminal 15 performed by decoding TBs. In HARQ, when coded TB is received 1 A, 1 B by the base station 10, 11, the station first decodes the TB. If there is a decoding failure (the channel quality is bad and not all transmission errors can be corrected), a retransmission of the particular TB is requested by the station. The transmission and retransmission of TB for block decoding attempts ends either in a decoding failure (non-successful decoding) or a successful decoding as will be described.

If no error in the first TB is found by the first 11 and/or the second 10 base stations (successful decoding), the base station/-s transmit 3B, see figure 2, a success indication to the RNC, comprising the first TB containing no errors. In soft handover (which the present invention relates to) the user terminal 15 will stop transmitting a particular TB as soon as it has been acknowledged (successfully decoded) by any base station involved in the handover.

If at least one error in the first TB is found by the first 11 and/or the second 10 base stations, the base station/-s that found the error further controls the number of decoding attempts for the first TB. The number of decoding attempts is stored in a decoding attempt counter. When HARQ is used, a sequence number Reception Sequence Number (RSN) is reset to zero when new data (a new TB) is transmitted. If the TB cannot be decoded, the RSN is stepped up in the decoding attempt counter and HARQ requests a retransmission of the TB. The counter is then further stepped up for every failed decoding of the particular TB, to a maximum value of 3. The number of retransmissions of a particular TB occurs at well defined occasions. For a TTI of 10 ms, it occurs every fourth TTI, and for a TTI of 2 ms every eighth TTI.

Retransmissions 1A/1B of the first TB occurs at certain times TTI relative to the first transmission. Since the TB is retransmitted for example every fourth or eight TTI the counter may either count time or number of decoding attempts.

The problem with the known power control solutions is that at periods when a small amount of data is transmitted infrequently and the connection is in soft handover (at least two base stations between which the user terminal is handover) a certain scenario may occur. The TB may be successfully decoded by one base station 10 without the other base station 11 being informed. The other base station will send a failure indication after the number of decoding attempts reaches a decoding attempt threshold, which triggers a step-up, see figure 3, of SIR target for no good reason. This is solved by the following method steps.

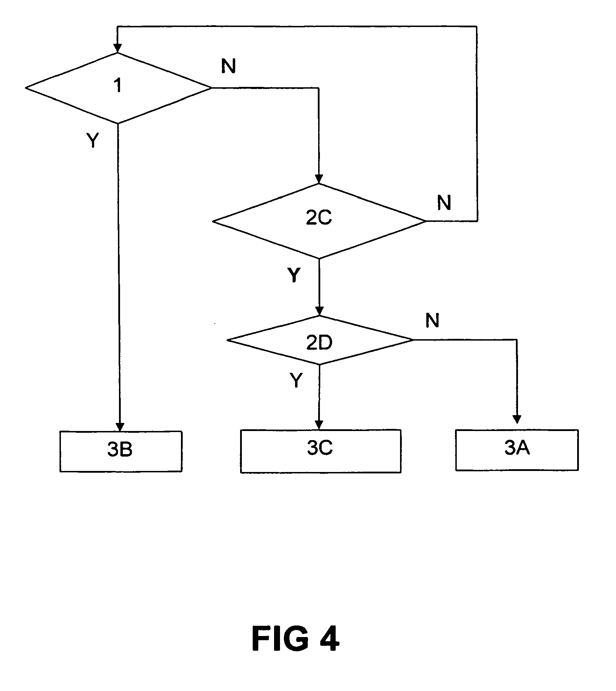

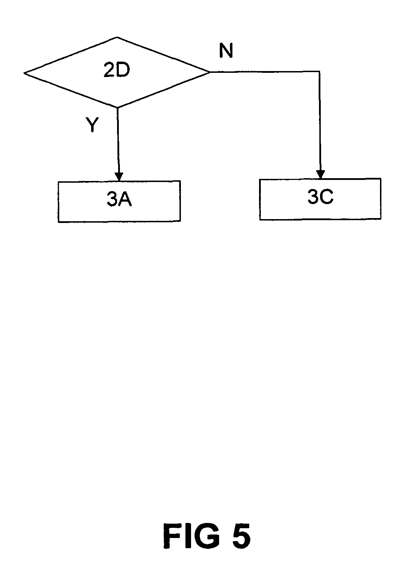

If the number of decoding attempts for the first TB is equal to a decoding attempt threshold 2C, the base station/-s 10, 11 that found the error further determines 2D if the first TB is a discontinuous transmission frame (DTX) or a TB including errors. If the base station/-s 10,11 determines that the first TB is a DTX, the base station/-s that found the error further resets 3C the decoding attempt counter and prepares the station/-s for a new, second TB. This is illustrated in figure 4 and 5.

DTX is continuously detected by the base stations 10, 11. However, nothing happens before the counter reaches the decoding attempt threshold (e.g. value 3). The reset of the counter is the same procedure as when the TB is successfully decoded.

If the base station/-s 10,11 instead determines that the first TB is a TB that includes errors, the base station/-s 10,11 that found the error further transmits 3A a failure indication to the RNC 12. The indication comprises the first TB including the error. The failure indication preferably consists in a Hybrid Automatic Repeat Request (HARQ) failure indication. The RNC then checks the Block Error Rate (BLER) ratio on the first TB transmitted from the base station/-s and determines a signal to interference ratio (SIR) target on the basis of the BLER.

The scope of the present invention is to enable for the second base station 10 to determine if the first TB has been successfully decoded or not by the first base station 10. In accordance with the present invention, the first base station 11 interprets the DTX in the Transmission Time Interval (TTI), when the first TB would have been transmitted, as an indication that the first TB has been successfully decoded at least by the second base station 10. In soft handover (which the present invention relates to), the user terminal 15 will stop transmitting a particular TB as soon as it has been acknowledged (successfully decoded) by any base station involved in the handover. A DTX is then sent at the TTI by the user terminal 15 instead of a TB.

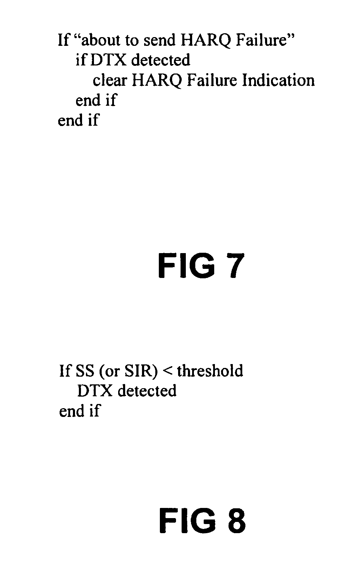

When the first base station 11 interprets the transmission of the DTX as an indication of a successful decoding, it suppresses the sending of a failure indication to the RNC. This is illustrated by a cross over 3A in figure 6. This can be expressed as shown in figure 7 (for HARQ):
The suppression of the HARQ Failure Indication can preferably be done e.g. when the first base station is about to send 3A the indication to the RNC 12.

The determination of DTX by the base station/-s 10, 11 that found the error in the first TB is preferably at least based on the signal strength or signal to noise ratio when transmitting the first TB. The signal strength or signal to noise ratio is determined by the base station/-s (10, 11) by accumulating the received signal energy or measure the received signal power. A threshold for signal strength that indicates the presence of DTX depends on whether the signal strength or the signal to noise ratio is issued. Figure 8 shows how this can be expressed, as (for signal strength - SS or Signal to Noise ratio - SIR), see also 2D in figure 5.

DTX detection is performed by accumulating received energy or measuring received power for the code or codes should be used for E-DCH. The easiest way is to measure on E-DPCCH since it has a fixed rate.

It will be appreciated by the person skilled in the art that various modifications may be made to the above-described embodiments without departing from the scope of the present invention. All such various modifications are included within the scope of the invention, which is that the first base station interprets the DTX where a retransmission would have occurred as an indication that the TB has been successfully decoded by another base station, and that there is no need to send a HARQ Failure indication.

## Claims

1. Method for power control in an enhanced uplink (UL) telecommunication system comprising at least one first radio network controller (RNC) (12) and at least one first (11) and one second (10) base station enabling wireless communication with at least one first user terminal (15),
the first (11) and the second (10) base stations receiving at least a first transport block (TB), the first TB being transmitted by the user terminal over an established communication channel,
the first (11) and the second (10) base station controlling whether the received first TB includes at least one error,
if at least one error in the first TB is found by the first (11) and/or the second (10) base station, the base station/-s that found the error further controls the number of decoding attempts for the first TB, the number of decoding attempts being stored in a decoding attempt counter,
**characterized in that**
if the number of decoding attempts for the first TB is equal to a decoding attempt threshold, the base station/-s (10,11) that found the error further determines if the first TB is a discontinuous transmission frame (DTX) or a TB including errors,
if the base station/-s (10,11) determines that the first TB is a DTX, the base station/-s that found the error further resets the decoding attempt counter and prepares the station/-s for a new, second TB.

2. Method according to claim 1 wherein the first base station (11) interprets the DTX in the Transmission Time Interval (TTI) when the first TB would have been transmitted as an indication that the first TB has been successfully decoded at least by the second base station (10).

3. Method according to claim 2 wherein the first base station when interpreting the transmission of the DTX as an indication of a successful decoding suppress the sending of a failure indication to the RNC.

4. Method according to any of the preceding claims wherein if the base station/-s (10,11) determines that the first TB is a TB that includes errors, the base station/-s (10,11) that found the error further transmits a failure indication to the RNC, comprising the first TB including the error.

5. Method according to claim 4 wherein the RNC checks the Block Error Rate (BLER) ratio on the first TB transmitted from the base station/-s and determines a signal to interference ratio (SIR) target on the basis of the BLER.

6. Method according to any of the claims 3 - 5 wherein the failure indication consists in a Hybrid Automatic Repeat Request (HARQ) failure indication.

7. Method according to any of the preceding claims wherein if no error in the first TB is found by the first (11) and/or the second (10) base station, the base station/-s transmit a success indication to the RNC, comprising the first TB containing no errors.

8. Method according to any of the preceding claims wherein the determination of DTX by the base station/-s (10, 11) that found the error is at least based on the signal strength or signal to noise ratio when transmitting the first TB.

9. Method according to claim 8 wherein the signal strength or signal to noise ratio is determined by the base station/-s (10, 11) by accumulating the received signal energy or measure the received signal power.

10. Method according to any of the claims 8 - 9 wherein a threshold for signal strength used to indicate the presence of DTX depends on whether the signal strength or the signal to noise ratio is issued.

11. Base station adapted for power control in an enhanced uplink (UL) telecommunication system further comprising at least one first radio network controller (RNC) (12), at least one first (11) and one second (10) base station in the system enabling wireless communication with at least one first user terminal (15),
the first (11) and the second (10) base stations being adapted to receive at least a first transport block (TB), the first TB being transmitted by the user terminal over an established communication channel,
the first (11) and the second (10) base station further being adapted to control whether the received first TB includes at least one error,
if at least one error in the first TB is found by the first (11) and/or the second (10) base station, the base station/-s that found the error further being adapted to control the number of decoding attempts for the first TB, the number of decoding attempts being stored in a decoding attempt counter,
**characterized in that**
if the number of decoding attempts for the first TB is equal to a decoding attempt threshold, the base station/-s (10,11) that found the error is further adapted to determine if the first TB is a discontinuous transmission frame (DTX) or a TB including errors,
if the first TB is a DTX, the base station/-s that found the error is further adapted to reset the decoding attempt counter and prepares the station/-s for a new, second TB.

12. Base station according to claim 11 wherein the first base station (11) is adapted to interpret the DTX in the Transmission Time Interval (TTI) when the first TB would have been transmitted as an indication that the first TB has been successfully decoded at least by the second base station (10).

13. Base station according to claim 12 wherein the first base station when interpreting the transmission of the DTX as an indication of a successful decoding is further adapted to suppress the sending of a failure indication to the RNC.

14. Base station according to any of the claims 11 - 13 wherein if the base station/-s (10,11) determines that the first TB is a TB that includes errors, the base station/-s (10,11) that found the error is further adapted to transmit a failure indication to the RNC, comprising the first TB including the error.

15. Base station according to any of the claims 13 - 14 wherein the failure indication consists in a Hybrid Automatic Repeat Request (HARQ) failure indication.

16. Base station according to any of the claims 11 - 15 wherein if no error in the first TB is found by the first (11) and/or the second (10) base station, the base station/-s is adapted to transmit a success indication to the RNC, comprising the first TB containing no errors.

17. Base station according to any of the claims 11 - 16 wherein the base station/-s (10,11) that found the error is adapted to determine DTX at least based on the signal strength or signal to noise ratio when transmitting the first TB.

18. Base station according to claim 17 wherein the base station/-s (10, 11) is further adapted to determine the signal strength or signal to noise ratio by accumulating the received signal energy or measure the received signal power.

19. Base station according to any of the claims 17 - 18 wherein a threshold for signal strength used to indicate the presence of DTX depends on whether the signal strength or the signal to noise ratio is issued.

20. Enhanced uplink (UL) telecommunication system adapted for power control, the system comprising at least one first radio network controller (RNC) (12) and at least one first (11) and one second (10) base station enabling wireless communication with at least one first user terminal (15),
the first (11) and the second (10) base stations being adapted to receive at least a first transport block (TB), the first TB being transmitted by the user terminal over an established communication channel,
the first (11) and the second (10) base station further being adapted to control whether the received first TB includes at least one error,
if at least one error in the first TB is found by the first (11) and/or the second (10) base station, the base station/-s that found the error further being adapted to control the number of decoding attempts for the first TB, the number of decoding attempts being stored in a decoding attempt counter,
**characterized in that**
if the number of decoding attempts for the first TB is equal to a decoding attempt threshold, the base station/-s (10,11) that found the error is further adapted to determine if the first TB is a discontinuous transmission frame (DTX) or a TB including errors,
if the first TB is a DTX, the base station/-s that found the error is further adapted to reset the decoding attempt counter and prepares the station/-s for a new, second TB.

21. System according to claim 20 wherein the first base station (11) is adapted to interpret the DTX in the Transmission Time Interval (TTI) when the first TB would have been transmitted as an indication that the first TB has been successfully decoded at least by the second base station (10).

22. System according to claim 21 wherein the first base station when interpreting the transmission of the DTX as an indication of a successful decoding is further adapted to suppress the sending of a failure indication to the RNC.

23. System according to any of the claims 20 - 22 wherein if the base station/-s (10,11) determines that the first TB is a TB that includes errors, the base station/-s (10,11) that found the error is further adapted to transmit a failure indication to the RNC, comprising the first TB including the error.

24. System according to any of the claims 22 - 23 wherein the failure indication consists in a Hybrid Automatic Repeat Request (HARQ) failure indication.

25. System according to any of the claims 20 - 24 wherein if no error in the first TB is found by the first (11) and/or the second (10) base station, the base station/-s is adapted to transmit a success indication to the RNC, comprising the first TB containing no errors.

26. System according to any of the claims 20 - 25 wherein the base station/-s (10,11) that found the error is adapted to determine DTX at least based on the signal strength or signal to noise ratio when transmitting the first TB.

27. System according to claim 26 wherein the base station/-s (10, 11) is further adapted to determine the signal strength or signal to noise ratio by accumulating the received signal energy or measure the received signal power.

28. System according to any of the claims 26 - 27 wherein a threshold for signal strength used to indicate the presence of DTX depends on whether the signal strength or the signal to noise ratio is issued.

## Patentansprüche

1. Verfahren zur Leistungssteuerung in einem erweiterten UL(Uplink)-Telekommunikationssystem, das mindestens eine erste Funknetzsteuerung (RNC) (12) und mindestens eine erste (11) und eine zweite (10) Basisstation umfasst, die drahtlose Kommunikation mit mindestens einem ersten Benutzerendgerät (15) ermöglichen,
wobei die erste (11) und die zweite (10) Basisstation dazu angepasst sind, mindestens einen ersten Transportblock (TB) zu empfangen, wobei der erste TB durch das Benutzerendgerät über einen etablierten Kommunikationskanal übertragen wird,
wobei die erste (11) und die zweite (10) Basisstation steuern, ob der empfangene erste TB mindestens einen Fehler einschließt,
falls mindestens ein Fehler im ersten TB von der ersten (11) und/oder der zweiten (10) Basisstation gefunden wird, steuert die mindestens eine Basisstation, die den Fehler gefunden hat, außerdem die Anzahl von Decodierversuchen für den ersten TB, wobei die Anzahl von Decodierversuchen in einem Decodierversuchszähler gespeichert wird,
**dadurch gekennzeichnet, dass**,
falls die Anzahl von Decodierversuchen für den ersten TB gleich einer Decodierversuchsschwelle ist, die mindestens eine Basisstation (10, 11), die den Fehler gefunden hat, außerdem bestimmt, ob der erste TB ein diskontinuierlicher Übertragungsrahmen (DTX) ist oder ein TB, der Fehler einschließt,
falls die mindestens eine Basisstation (10, 11) bestimmt, dass der erste TB ein DTX ist, setzt die mindestens eine Basisstation, die den Fehler gefunden hat, außerdem den Decodierversuchszähler zurück und richtet die mindestens eine Basisstation für einen neuen zweiten TB ein.

2. Verfahren nach Anspruch 1, worin die erste Basisstation (11) den DTX im Übertragungszeitintervall (TTI) interpretiert, wenn der erste TB als eine Anzeige übertragen worden wäre, dass der erste TB mindestens von der zweiten Basisstation (10) erfolgreich decodiert wurde.

3. Verfahren nach Anspruch 2, worin die erste Basisstation, wenn sie die Übertragung des DTX als eine Anzeige einer erfolgreichen Decodierung interpretiert, das Senden einer Fehleranzeige an die RNC unterdrückt.

4. Verfahren nach einem der vorhergehenden Ansprüche, worin, falls die mindestens eine Basisstation (10, 11) bestimmt, dass der erste TB ein TB ist, der Fehler einschließt, die mindestens eine Basisstation (10, 11), die den Fehler gefunden hat, außerdem eine Fehleranzeige an die RNC überträgt, die den ersten TB einschließlich des Fehlers umfasst.

5. Verfahren nach Anspruch 4, worin die RNC das BLER(Blockfehlerrate)-Verhältnis auf dem ersten TB prüft, der von der mindestens einen Basisstation übertragen wird, und auf der Basis des BLER ein SIR(Signal-Stör-Verhältnis)-Ziel bestimmt.

6. Verfahren nach einem der Ansprüche 3 - 5, worin die Fehleranzeige aus einer HARQ(hybride automatische Wiederholungsanforderung)-Fehleranzeigt besteht.

7. Verfahren nach einem der vorhergehenden Ansprüche, worin, falls von der ersten (11) und/oder der zweiten (10) Basisstation kein Fehler im ersten TB gefunden wird, die mindestens eine Basisstation eine Erfolgsanzeige an die RNC überträgt, die den keine Fehler enthaltenden ersten TB umfasst.

8. Verfahren nach einem der vorhergehenden Ansprüche, worin die Bestimmung des DTX durch die mindestens eine Basisstation (10, 11), die den Fehler gefunden hat, mindestens auf der Signalstärke oder dem Signal-Stör-Verhältnis basiert, wenn der erste TB übertragen wird.

9. Verfahren nach Anspruch 8, worin die Signalstärke oder das Signal-Stör-Verhältnis von der mindestens einen Basisstation (10, 11) durch Akkumulieren der empfangenen Signalenergie oder durch Messen der empfangenen Signalleistung bestimmt wird.

10. Verfahren nach einem der Ansprüche 8 - 9, worin eine Schwelle für Signalstärke, die verwendet wird, um das Vorhandensein von DTX anzuzeigen, davon abhängt, ob die Signalstärke oder das Signal-Stör-Verhältnis ausgegeben wird.

11. Basisstation, angepasst zur Leistungssteuerung in einem erweiterten UL(Uplink)-Telekommunikationssystem, das außerdem mindestens eine erste Funknetzsteuerung (RNC) (12), mindestens eine erste (11) und eine zweite (10) Basisstation im System umfasst, die drahtlose Kommunikation mit mindestens einem ersten Benutzerendgerät (15) ermöglichen,
wobei die erste (11) und die zweite (10) Basisstation dazu angepasst sind, mindestens einen ersten Transportblock (TB) zu empfangen, wobei der erste TB durch das Benutzerendgerät über einen etablierten Kommunikationskanal übertragen wird,
wobei die erste (11) und die zweite (10) Basisstation außerdem angepasst sind, um zu steuern, ob der empfangene erste TB mindestens einen Fehler einschließt,
falls mindestens ein Fehler im ersten TB von der ersten (11) und/oder der zweiten (10) Basisstation gefunden wird, ist die mindestens eine Basisstation, die den Fehler gefunden hat, außerdem dazu angepasst, die Anzahl von Decodierversuchen für den ersten TB zu steuern, wobei die Anzahl von Decodierversuchen in einem Decodierversuchszähler gespeichert wird,
**dadurch gekennzeichnet, dass**,
falls die Anzahl von Decodierversuchen für den ersten TB gleich einer Decodierversuchsschwelle ist, die mindestens eine Basisstation (10, 11), die den Fehler gefunden hat, außerdem zum Bestimmen angepasst ist, ob der erste TB ein diskontinuierlicher Übertragungsrahmen (DTX) ist, oder ein TB, der Fehler einschließt,
falls der erste TB ein DTX ist, ist die mindestens eine Basisstation, die den Fehler gefunden hat, außerdem dazu angepasst, den Decodierversuchszähler zurückzusetzen und die mindestens eine Station für einen neuen zweiten TB einzurichten.

12. Basisstation nach Anspruch 11, worin die erste Basisstation (11) dazu angepasst ist, den DTX im Übertragungszeitintervall (TTI) zu interpretieren, wenn der erste TB als eine Anzeige übertragen worden wäre, dass der erste TB mindestens von der zweiten Basisstation (10) erfolgreich decodiert wurde.

13. Basisstation nach Anspruch 12, worin die erste Basisstation, wenn sie die Übertragung des DTX als eine Anzeige einer erfolgreichen Decodierung interpretiert, außerdem dazu angepasst ist, das Senden einer Fehleranzeige an die RNC zu unterdrücken.

14. Basisstation nach einem der vorhergehenden Ansprüche 11 - 13, worin, falls die mindestens eine Basisstation (10, 11) bestimmt, dass der erste TB ein TB ist, der Fehler einschließt, die mindestens eine Basisstation (10, 11), die den Fehler gefunden hat, außerdem dazu angepasst ist, eine Fehleranzeige an die RNC zu übertragen, die den ersten TB einschließlich des Fehlers umfasst.

15. Basisstation nach einem der Ansprüche 13 - 14, worin die Fehleranzeige aus einer HARQ(hybride automatische Wiederholungsanforderung)-Fehleranzeigt besteht.

16. Basisstation nach einem der vorhergehenden Ansprüche 11 - 15, worin, falls von der ersten (11) und/oder der zweiten (10) Basisstation kein Fehler im ersten TB gefunden wird, die mindestens eine Basisstation dazu angepasst ist, eine Erfolgsanzeige an die RNC zu übertragen, die den keine Fehler enthaltenden ersten TB umfasst.

17. Basisstation nach einem der Ansprüche 11 - 16, worin die mindestens eine Basisstation (10,11), die den Fehler gefunden hat, dazu angepasst ist, den DTX mindestens auf der Basis der Signalstärke oder des Signal-Stör-Verhältnisses zu bestimmen, wenn der erste TB übertragen wird.

18. Basisstation nach Anspruch 17, worin die mindestens eine Basisstation (10,11) außerdem dazu angepasst ist, die Signalstärke oder das Signal-Stör-Verhältnis durch Akkumulieren der empfangenen Signalenergie oder durch Messen der empfangenen Signalleistung zu bestimmen.

19. Basisstation nach einem der Ansprüche 17 - 18, worin eine Schwelle für Signalstärke verwendet wird, um anzuzeigen, dass das Vorhandensein von DTX davon abhängt, ob die Signalstärke oder das Signal-Stör-Verhältnis ausgegeben wird.

20. Erweitertes UL(Uplink)-Telekommunikationssystem, das zur Leistungssteuerung angepasst ist, wobei das System mindestens eine erste Funknetzsteuerung (RNC) (12) und mindestens eine erste (11) und eine zweite (10) Basisstation umfasst, die drahtlose Kommunikation mit mindestens einem ersten Benutzerendgerät (15) ermöglichen,
wobei die erste (11) und die zweite (10) Basisstation dazu angepasst sind, mindestens einen ersten Transportblock (TB) zu empfangen, wobei der erste TB durch das Benutzerendgerät über einen etablierten Kommunikationskanal übertragen wird,
wobei die erste (11) und die zweite (10) Basisstation außerdem zum Steuern angepasst sind, ob der empfangene erste TB mindestens einen Fehler einschließt,
falls mindestens ein Fehler im ersten TB von der ersten (11) und/oder der zweiten (10) Basisstation gefunden wird, ist die mindestens eine Basisstation, die den Fehler gefunden hat, außerdem dazu angepasst, die Anzahl von Decodierversuchen für den ersten TB zu steuern, wobei die Anzahl von Decodierversuchen in einem Decodierversuchszähler gespeichert wird,
**dadurch gekennzeichnet, dass**,
falls die Anzahl von Decodierversuchen für den ersten TB gleich einer Decodierversuchsschwelle ist, die mindestens eine Basisstation (10,11), die den Fehler gefunden hat, außerdem zum Bestimmen angepasst ist, ob der erste TB ein diskontinuierlicher Übertragungsrahmen (DTX) ist oder ein TB, der Fehler einschließt,
falls der erste TB ein DTX ist, ist die Basisstation, die den Fehler gefunden hat, außerdem dazu angepasst, den Decodierversuchszähler zurückzusetzen und die mindestens eine Station für einen neuen zweiten TB einzurichten.

21. System nach Anspruch 20, worin die erste Basisstation (11) dazu angepasst ist, den DTX im Übertragungszeitintervall (TTI) zu interpretieren, wenn der erste TB als eine Anzeige übertragen worden wäre, dass der erste TB mindestens von der zweiten Basisstation (10) erfolgreich decodiert wurde.

22. System nach Anspruch 21, worin die erste Basisstation, wenn sie die Übertragung des DTX als eine Anzeige einer erfolgreichen Decodierung interpretiert, außerdem dazu angepasst ist, das Senden einer Fehleranzeige an die RNC zu unterdrücken.

23. System nach einem der Ansprüche 20 - 22, worin, falls die mindestens eine Basisstation (10, 11) bestimmt, dass der erste TB ein TB ist, der Fehler einschließt, die mindestens eine Basisstation (10, 11), die den Fehler gefunden hat, außerdem dazu angepasst ist, eine Fehleranzeige an die RNC zu übertragen, die den ersten TB einschließlich des Fehlers umfasst.

24. System nach einem der Ansprüche 22 - 23, worin die Fehleranzeige aus einer HARQ(hybride automatische Wiederholungsanforderung)-Fehleranzeigt besteht.

25. System nach einem der vorhergehenden Ansprüche 20 - 24, worin, falls von der ersten (11) und/oder der zweiten (10) Basisstation kein Fehler im ersten TB gefunden wird, die mindestens eine Basisstation dazu angepasst ist, eine Erfolgsanzeige an die RNC zu übertragen, die den keine Fehler enthaltenden ersten TB umfasst.

26. System nach einem der Ansprüche 20 - 25, worin die mindestens eine Basisstation (10, 11), die den Fehler gefunden hat, dazu angepasst ist, den DTX mindestens zum Teil auf der Signalstärke oder dem Signal-Stör-Verhältnis basierend zu bestimmen, wenn der erste TB übertragen wird.

27. System nach Anspruch 26, worin die mindestens eine Basisstation (10, 11) außerdem dazu angepasst ist, die Signalstärke oder das Signal-Stör-Verhältnis durch Akkumulieren der empfangenen Signalenergie oder durch Messen der empfangenen Signalleistung zu bestimmen.

28. System nach einem der Ansprüche 26 - 27, worin eine Schwelle für Signalstärke verwendet wird, um anzuzeigen, dass das Vorhandensein von DTX davon abhängt, ob die Signalstärke oder das Signal-Stör-Verhältnis ausgegeben wird.

## Revendications

1. Procédé de commande de puissance dans un système de télécommunication en liaison ascendante (UL) amélioré comprenant au moins un premier contrôleur de réseau radio (RNC) (12) et au moins une première (11) et une seconde (10) station de base permettant une communication sans fil avec au moins un premier terminal d'utilisateur (15) ;
la première (11) et la seconde (10) station de base recevant au moins un premier bloc de transport (TB), le premier bloc TB étant transmis par le terminal d'utilisateur sur un canal de communication établi ;
la première (11) et la seconde (10) station de base contrôlant si le premier bloc TB reçu inclut au moins une erreur ;
si au moins une erreur dans le premier bloc TB est trouvée par la première (11) et/ou la seconde (10) station de base, la ou les stations de base ayant trouvé l'erreur contrôlent en outre le nombre de tentatives de décodage pour le premier bloc TB, le nombre de tentatives de décodage étant stocké dans un compteur de tentatives de décodage ;
**caractérisé en ce que** :
si le nombre de tentatives de décodage pour le premier bloc TB est égal à un seuil de tentatives de décodage, la ou les stations de base (10, 11) ayant trouvé l'erreur déterminent en outre si le premier bloc TB correspond à une trame de transmission discontinue (DTX) ou à un bloc TB incluant des erreurs ;
si la ou les stations de base (10, 11) déterminent que le premier bloc TB correspond à une trame DTX, la ou les stations de base ayant trouvé l'erreur réinitialisent en outre le compteur de tentatives de décodage et préparent la ou les station(s) pour un nouveau second bloc TB.

2. Procédé selon la revendication 1, dans lequel la première station de base (11) interprète la trame DTX, dans l'intervalle de temps de transmission (TTI) lorsque le premier bloc TB aurait été transmis, en tant qu'une indication selon laquelle le premier bloc TB a été décodé correctement au moins par la seconde station de base (10).

3. Procédé selon la revendication 2, dans lequel, la première station de base, lors de l'interprétation de la transmission de la trame DTX en tant qu'une indication d'un décodage réussi, supprime l'envoi d'une indication de défaillance au contrôleur RNC.

4. Procédé selon l'une quelconque des revendications précédentes, dans lequel, si la ou les stations de base (10, 11) déterminent que le premier bloc TB correspond à un bloc TB qui inclut des erreurs, la ou les stations de base (10, 11) ayant trouvé l'erreur transmettent en outre une indication de défaillance, au contrôleur RNC, comprenant le premier bloc TB incluant l'erreur.

5. Procédé selon la revendication 4, dans lequel le contrôleur RNC vérifie le taux d'erreur sur les blocs (BLER) sur le premier bloc TB transmis à partir de la ou des stations de base et détermine un rapport « signal sur brouillage » (SIR) cible sur la base du taux BLER.

6. Procédé selon l'une quelconque des revendications 3 à 5, dans lequel l'indication de défaillance constitue une indication de défaillance de demande de répétition automatique hybride (HARQ).

7. Procédé selon l'une quelconque des revendications précédentes, dans lequel, si aucune erreur dans le premier bloc TB n'est trouvée par la première (11) et/ou la seconde (10) station de base, la ou les stations de base transmettent une indication de réussite au contrôleur RNC, comprenant le premier bloc TB ne contenant pas d'erreurs.

8. Procédé selon l'une quelconque des revendications précédentes, dans lequel la détermination de la trame DTX par la ou les stations de base (10, 11) ayant trouvé l'erreur est au moins basée sur la puissance de signal ou le rapport « signal sur bruit » lors de la transmission du premier bloc TB.

9. Procédé selon la revendication 8, dans lequel la puissance de signal ou le rapport « signal sur bruit » est déterminé(e) par la ou les stations de base (10, 11), en accumulant l'énergie de signal reçue ou en mesurant la puissance de signal reçue.

10. Procédé selon l'une quelconque des revendications 8 à 9, dans lequel un seuil de puissance de signal utilisé en vue d'indiquer la présence d'une trame DTX dépend du fait que la puissance de signal ou le rapport « signal sur bruit » est émis(e).

11. Station de base apte à une commande de puissance dans un système de télécommunication en liaison ascendante (UL) amélioré comprenant en outre au moins un premier contrôleur de réseau radio (RNC) (12) et au moins une première (11) et une seconde (10) station de base dans le système permettant une communication sans fil avec au moins un premier terminal d'utilisateur (15) ;
la première (11) et la seconde (10) station de base étant aptes à recevoir au moins un premier bloc de transport (TB), le premier bloc TB étant transmis par le terminal d'utilisateur sur un canal de communication établi ;
la première (11) et la seconde (10) station de base étant aptes à contrôler si le premier bloc TB reçu inclut au moins une erreur ;
si au moins une erreur dans le premier bloc TB est trouvée par la première (11) et/ou la seconde (10) station de base, la ou les stations de base ayant trouvé l'erreur étant en outre aptes à contrôler le nombre de tentatives de décodage pour le premier bloc TB, le nombre de tentatives de décodage étant stocké dans un compteur de tentatives de décodage ;
**caractérisé en ce que** :
si le nombre de tentatives de décodage pour le premier bloc TB est égal à un seuil de tentatives de décodage, la ou les stations de base (10, 11) ayant trouvé l'erreur sont en outre aptes à déterminer si le premier bloc TB correspond à une trame de transmission discontinue (DTX) ou à un bloc TB incluant des erreurs ;
si le premier bloc TB correspond à une trame DTX, la ou les stations de base ayant trouvé l'erreur sont en outre aptes à réinitialiser le compteur de tentatives de décodage et à préparer la ou les stations pour un nouveau second bloc TB.

12. Station de base selon la revendication 11, dans laquelle la première station de base (11) est apte à interpréter la trame DTX, dans l'intervalle de temps de transmission (TTI) lorsque le premier bloc TB aurait été transmis, en tant qu'une indication selon laquelle le premier bloc TB a été décodé correctement au moins par la seconde station de base (10).

13. Station de base selon la revendication 12, dans laquelle la première station de base, lors de l'interprétation de la transmission de la trame DTX en tant qu'une indication d'un décodage réussi, est en outre apte à supprimer l'envoi d'une indication de défaillance au contrôleur RNC.

14. Station de base selon l'une quelconque des revendications 11 à 13, dans laquelle, si la ou les stations de base (10, 11) déterminent que le premier bloc TB correspond à un bloc TB qui inclut des erreurs, la ou les stations de base (10, 11) ayant trouvé l'erreur sont en outre aptes à transmettre une indication de défaillance, au contrôleur RNC, comprenant le premier bloc TB incluant l'erreur.

15. Station de base selon l'une quelconque des revendications 13 à 14, dans laquelle l'indication de défaillance constitue une indication de défaillance de demande de répétition automatique hybride (HARQ).

16. Station de base selon l'une quelconque des revendications 11 à 15, dans laquelle, si aucune erreur dans le premier bloc TB n'est trouvée par la première (11) et/ou la seconde (10) station de base, la ou les stations de base sont aptes à transmettre une indication de réussite au contrôleur RNC, comprenant le premier bloc TB ne contenant pas d'erreurs.

17. Station de base selon l'une quelconque des revendications 11 à 16, dans laquelle la ou les stations de base (10, 11) ayant trouvé l'erreur sont aptes à déterminer une trame DTX au moins sur la base de la puissance de signal ou du rapport « signal sur bruit » lors de la transmission du premier bloc TB.

18. Station de base selon la revendication 17, dans laquelle la ou les stations de base (10, 11) sont en outre aptes à déterminer la puissance de signal ou le rapport « signal sur bruit », en accumulant l'énergie de signal reçue ou en mesurant la puissance de signal reçue.

19. Station de base selon l'une quelconque des revendications 17 à 18, dans laquelle un seuil de puissance de signal utilisé en vue d'indiquer la présence d'une trame DTX dépend du fait que la puissance de signal ou le rapport « signal sur bruit » est émis(e).

20. Système de télécommunication en liaison montante (UL) amélioré apte à une commande de puissance, le système comprenant au moins un premier contrôleur de réseau radio (RNC) (12) et au moins une première (11) et une seconde (10) station de base permettant une communication sans fil avec au moins un premier terminal d'utilisateur (15) ;
la première (11) et la seconde (10) station de base étant aptes à recevoir au moins un premier bloc de transport (TB), le premier bloc TB étant transmis par le terminal d'utilisateur sur un canal de communication établi ;
la première (11) et la seconde (10) station de base étant en outre aptes à contrôler si le premier bloc TB reçu inclut au moins une erreur ;
si au moins une erreur dans le premier bloc TB est trouvée par la première (11) et/ou la seconde (10) station de base, la ou les stations de base ayant trouvé l'erreur étant en outre aptes à contrôler le nombre de tentatives de décodage pour le premier bloc TB, le nombre de tentatives de décodage étant stocké dans un compteur de tentatives de décodage ;
**caractérisé en ce que** :
si le nombre de tentatives de décodage pour le premier bloc TB est égal à un seuil de tentatives de décodage, la ou les stations de base (10, 11) ayant trouvé l'erreur sont en outre aptes à déterminer si le premier bloc TB correspond à une trame de transmission discontinue (DTX) ou à un bloc TB incluant des erreurs ;
si le premier bloc TB correspond à une trame DTX, la ou les stations de base ayant trouvé l'erreur sont en outre aptes à réinitialiser le compteur de tentatives de décodage et à préparer la ou les stations pour un nouveau second bloc TB.

21. Système selon la revendication 20, dans lequel la première station de base (11) est apte à interpréter la trame DTX, dans l'intervalle de temps de transmission (TTI) lorsque le premier bloc TB aurait été transmis, en tant qu'une indication selon laquelle le premier bloc TB a été décodé correctement au moins par la seconde station de base (10).

22. Système selon la revendication 21, dans lequel la première station de base, lors de l'interprétation de la transmission de la trame DTX en tant qu'une indication d'un décodage réussi, est en outre apte à supprimer l'envoi d'une indication de défaillance au contrôleur RNC.

23. Système selon l'une quelconque des revendications 20 à 22, dans lequel, si la ou les stations de base (10, 11) déterminent que le premier bloc TB correspond à un bloc TB qui inclut des erreurs, la ou les stations de base (10, 11) ayant trouvé l'erreur sont en outre aptes à transmettre une indication de défaillance, au contrôleur RNC, comprenant le premier bloc TB incluant l'erreur.

24. Système selon l'une quelconque des revendications 22 à 23, dans lequel l'indication de défaillance constitue une indication de défaillance de demande de répétition automatique hybride (HARQ).

25. Système selon l'une quelconque des revendications 20 à 24, dans lequel, si aucune erreur dans le premier bloc TB n'est trouvée par la première (11) et/ou la seconde (10) station de base, la ou les stations de base sont aptes à transmettre une indication de réussite au contrôleur RNC, comprenant le premier bloc TB ne contenant pas d'erreurs.

26. Système selon l'une quelconque des revendications 20 à 25, dans lequel la ou les stations de base (10, 11) ayant trouvé l'erreur sont aptes à déterminer une trame DTX au moins sur la base de la puissance de signal ou du rapport « signal sur bruit » lors de la transmission du premier bloc TB.

27. Système selon la revendication 26, dans lequel la ou les stations de base (10, 11) sont en outre aptes à déterminer la puissance de signal ou le rapport « signal sur bruit », en accumulant l'énergie de signal reçue ou en mesurant la puissance de signal reçue.

28. Système selon l'une quelconque des revendications 26 à 27, dans lequel un seuil de puissance de signal utilisé en vue d'indiquer la présence d'une trame DTX dépend du fait que la puissance de signal ou le rapport « signal sur bruit » est émis(e).
